# EUROPÄISCHE PATENTSCHRIFT

(11) **EP 1 846 186 B1**
(45) Veröffentlichungstag und Bekanntmachung des Hinweises auf die Patenterteilung: **01.04.2009**
(21) Anmeldenummer: 06708103.4
(22) Anmeldetag: 08.02.2006
(51) Int. Cl.: B23B 51/02

(54) **TIEFLOCHBOHRER**
DEEP HOLE DRILL
FORET LONG

(30) Priorität: 09.02.2005 DE 102005005982
(43) Veröffentlichungstag der Anmeldung: 24.10.2007
(73) Patentinhaber: WALTER AG, 72072 Tübingen (DE)
(72) Erfinder: SCHWEIGHÖFER, Günter, 63654 Büdingen (DE); MÜLLER, Peter, 61352 Bad Homburg (DE)
(74) Vertreter: Seiffert, Klaus
(86) Internationale Anmeldenummer: PCT/EP2006/050757
(87) Internationale Veröffentlichungsnummer: WO 2006/084859

(56) Entgegenhaltungen:
- DE-A1- 10 331 328
- DE-A1- 19 602 030
- US-A- 5 353 552
- US-A- 5 678 960

## Beschreibung

Die vorliegende Erfindung betrifft einen Tieflochbohrer mit einem Schaft zum Einspannen in ein entsprechendes Futter und einem Spannuten aufweisende Abschnitt, dessen vorderes Ende durch eine Bohrerspitze gebildet wird, welche durch stirnseitig an dem vorderen Ende des Bohrers angeordnete Hauptschneiden definiert wird.

Entsprechende Bohrer sind beispielsweise bekannt aus der DE 196 02 030, aus der DE 103 31 328 und aus dem US-Patent Nr. 5,678,960.

Die DE 196 02 030 offenbart einen Bohrer, bei welchem die axiale Länge des Spannutenabschnittes mindestens das Zehnfache des Bohrerdurchmessers beträgt. Weiterhin offenbart diese Druckschrift auch eine Hartstoffbeschichtung der Bohrerspitze, einschließlich Haupt- und Nebenschneiden, Freiflächen und Spannuten, wobei jedoch der beschichtete Bereich, von der Bohrerspitze aus gemessen, das Dreifache des Bohrerdurchmessers nicht übersteigt.

Aus der DE 103 31 328 ist ein Tieflochbohrer bekannt, bei welchem das Länge-zu-DurchmesserVerhältnis des Spannutenabschnittes ebenfalls mehr als das Zehnfache betragen kann. Diese Druckschrift beschreibt zusätzlich eine Verjüngung des Kerns des Bohrers, von einem maximalen Kerndurchmesser an der Bohrerspitze, der zwischen 20 und 40 % des Nenndurchmessers betragen kann und der Kern sich in Richtung des Schaftes verjüngt, wobei der minimale Kerndurchmesser zwischen 15 und 33 % des Nenndurchmessers des Bohrers betragen kann. Dabei wird auch eine Beschichtung des zylindrischen Hauptkörpers des Bohrers einschließlich der Spannuten beschrieben, die nach dem Abscheiden geglättet bzw. poliert wird. Die DE 103 31 328 beschreibt auch eine Ausführungsform eines Bohrers, der im Bereich der Bohrerspitze einen maximalen Nenndurchmesser hat, wobei sich der Außendurchmesser des Bohrers zum Schaft hin durch einen Durchmessersprung oder auch konisch verjüngt.

Aus dem US-Patent Nr. 5,678,960 ist ebenfalls ein Tieflochbohrer bekannt, dessen Länge-zu-Durchmesser-Verhältnis 10 betragen kann und der ebenfalls eine konische Kernverjüngung definiert, wobei der Kerndurchmesser des Bohrers insgesamt im Bereich von 0,22 und 0,35 liegen soll.

Die vorliegende Erfindung ist auf entsprechende Tieflochbohrer gerichtet, bei welchen der Spannuten aufweisende Abschnitt (im folgenden "Spannutabschnitt") mindestens das Zehnfache des Nenndurchmessers des Bohrers beträgt.

Ein Problem, welches bei Bohrern generell auftreten kann, insbesondere aber bei Tieflochbohrern verschärft auftritt, ist die Spanabfuhr. Insbesondere bei Werkstoffen, die eine Tendenz zur Bildung langer Späne haben, kann dies ein erhebliches Problem darstellen.

Es gibt zahlreiche Ansätze zur Lösung dieses Problems. Ein Teil der Ansätze befaßt sich mit der Spanbildung und Spanformung, d.h. der Ausbildung der Hauptschneidkanten und des unmittelbar daran angrenzenden Bereichs, wo die Späne erzeugt und geformt werden. Weitere Ansätze betreffen die Größe und die Querschnittsform der Spannuten und schließlich kann auch die Steigung der Spannuten, die entweder gerade, d.h. achsparallel verlaufen oder aber wendelförmig bzw. schraubenförmig um den Bohrerkern umlaufen, auf vielfältige Weise beeinflußt werden. Als Bohrerkern wird dabei derjenige Teil des Spannutenabschnitts bezeichnet, der radial innerhalb des Grundes der Spannuten liegt, der also von den Spannuten nicht erfaßt wird.

Des weiteren sind auch schon zahlreiche Versuche unternommen worden, entsprechende Bohrer zu beschichten oder von vorneherein aus einem Material herzustellen, welches günstige Verschleiß-, aber auch günstige Reibungseigenschaften hat.

Alle diese Ansätze waren in begrenztem Maß erfolgreich. Dennoch lassen sich besonders tiefe Bohrungen, deren Tiefe mehr als das 10-fache und insbesondere mehr als das 15-fache des Durchmessers beträgt, oftmals nicht in einem Arbeitsgang herstellen, sondern der Bohrer muß unter Umständen zwischenzeitlich aus dem Bohrloch herausgezogen werden, um die Späne zunächst zu entfernen, um dann die Bohrung auf die gewünschte Tiefe fortzusetzen. Auch unter hohem Druck durch Kühlmittelbohrungen zugeführtes Kühlschmiermittel trägt zu dem Spantransport bei, obwohl man allerdings große Mengen derartiger Kühlschmiermittel lieber vermeidet, und die sogenannte "Minimalmengenschmierung" mit einem Öl/Luftgemisch inzwischen oftmals bevorzugt wird.

Gegenüber dem bekannten Stand der Technik liegt daher der vorliegenden Erfindung die Aufgabe zugrunde, einen Bohrer mit den eingangs genannten Merkmalen zu schaffen, der in der Lage ist, im kontinuierlichem Betrieb sehr tiefe Bohrungen von mehr als dem 10-fachen bis zu mehr als dem 20-fachen des Nenndurchmessers herzustellen und der dabei besonders wirtschaftlich arbeitet.

Erfindungsgemäß wird diese Aufgabe durch einen Bohrer mit den Merkmalen des Anspruchs 1 gelöst. Der erfindungsgemäße Bohrer weist in Kombination die Merkmale auf, daß die Länge des Spannutenabschnittes des Bohrers mehr als das 15-fache des Nenndurchmessers des Bohrers beträgt, wobei mindestens der an die Bohrerspitze angrenzende Bereich der Spannuten bis zu einem Abstand T von der Spitze des Bohrers, der maximal das Dreifache des Nenndurchmessers beträgt, mit einem Hartstoff beschichtet ist, während mindestens die Spannuten in dem Bereich, der weiter als T von der Spitze beabstandet ist, unbeschichtet sind. Der Bohrerkern hat in einem Bereich in der Nähe der Bohrerspitze einen maximalen Durchmesser, der mindestens 30 bis 55 % des Nenndurchmessers beträgt, während der Kerndurchmesser sich in Richtung des Schaftendes auf einen minimalen Durchmesser verjüngt, der zwischen 20 % und 50 % des Nenndurchmessers beträgt, wobei die zusätzliche Bedingung gilt, daß die Differenz zwischen dem maximalen und dem minimalen Kerndurchmesser zwischen 5 % und 12 % beträgt. Weiterhin ist auch die Außenkontur des Bohrers, der, ausgehend von einem maximalen Durchmesser am Übergang von der Spitze zu den Nebenschneidkanten des Bohrers, sich nach hinten um einen Betrag von 1 bis 8 µm pro mm in axialer Richtung verjüngt, allerdings nur bis zu einem Abstand L von der Spitze, der zwischen dem Dreifachen und dem Zehnfache des Nenndurchmessers liegt und im übrigen bis zum Einspannabschnitt des Schaftes einen im wesentlichen konstanten minimalen Außendurchmesserwert d hat.

Ein Bohrer mit dieser Kombination von Merkmalen hat sich als überraschend günstig im Hinblick auf seine Spanformungs- und Spantransporteigenschaften erwiesen.

Die beschichtete Spitze, die vor allem für Zwecke der Erhöhung der Standzeit und Verbesserung der Verschleißfestigkeit des Bohrers an sich bekannt ist, trägt offenbar auch zu einer günstigen Spanformung bei.

Aufgrund des großen Kerndurchmessers im Bereich der Spitze steht außerdem zu Beginn der Spannuten relativ wenig Platz für die Späne zur Verfügung, was diese weiterhin zu stärkerem Einrollen zwingt. Dabei wird die Spannut dennoch vor starkem Verschleiß geschont, da sie im Bereich der Spitze und auch im angrenzenden Bereich zunächst noch beschichtet ist.

Gleichzeitig nimmt der Kerndurchmesser von der Spitze aus bis zu einem näher am Schaft gelegenen Bereich ab, so daß die Spannuten entsprechend tiefer werden und einen größeren Querschnitt haben können. Dies erleichtert den Spantransport durch die Spannuten insbesondere im Hinblick darauf, daß der Spantransport zwar überwiegend durch Kühlschmiermittel oder Druckluft, zu einem gewissen Teil aber durch die an der Bohrerspitze neu erzeugten, nachgeschobenen Späne erfolgt.

Vorzugsweise verlaufen die Spannuten schraubenförmig, was den Spantransport weiter erleichtert, da die Späne dann teilweise an der Bohrwand reiben und gleichzeitig durch den Grund bzw. die Wand der Spannut mitgenommen werden, was im Ergebnis eine zum Schaft hin gerichtete Kraftkomponente auf die Späne erzeugt.

Insbesondere kann hierzu die Steigung der Spannuten bzw. die Steigung der die Spannuten begrenzenden Nebenschneiden am Außenumfang des Bohrers relativ klein sein, d.h. mit der Achse einen relativ großen Winkel von mindestens 20, vorzugsweise mindestens 30°; einschließen.

Als besonders günstig erweist es sich auch, daß die Beschichtung im Innern der Nuten auf maximal das Dreifache des Bohrerdurchmessers, gemessen ab der Spitze, beschränkt ist. Die Hartstoffbeschichtung hat zumeist einen größeren Reibungskoeffizienten für die Späne als die geschliffene Struktur der Spannuten des unbeschichteten Bohrers. Aus diesem Grund ist es günstig für den Spantransport, wenn für den größten Teil der Länge der Spannuten eine geringere Reibung vorhanden ist, die Spannuten also unbeschichtet bleiben. Gegebenenfalls können die Spannuten auch poliert sein.

Die Außenflächen der Stege, insbesondere die Rundfasen, könnten auch über die gesamte Länge des Spannutenteils mit einem Hartstoff beschichtet sein. Andererseits ist es jedoch auch nicht zwingend erforderlich, daß die Stege bzw. Rundfasen an ihrer Außenseite überhaupt beschichtet sind, zweckmäßigerweise sind aber auch die Rundfasen in dem vorderen, an die Spitze angrenzenden Bereich beschichtet, wo auch die Innenflächen der Spannuten beschichtet sind.

Unter Herstellungsgesichtspunkten ist es zweckmäßig, wenn Spannuten und Stege insgesamt über dieselbe axiale Länge hinweg beschichtet sind. Dies wirkt dem Verschleiß der Rundfasen in dem an die Spitze angrenzenden Bereich entgegen.

Gemäß der Erfindung verjüngt sich auch der Außendurchmesser des Bohrers, beginnend von einem maximalen Durchmesser an der Bohrerspitze, genauer gesagt am Übergang der Bohrerspitze zum Spannutenabschnitt, in Richtung des Schaftes, jedoch in geringerem Maß als der Kern. Konkret ist dabei eine Variante bevorzugt, bei welcher die Verjüngung des Außendurchmessers zwischen 1 µm und 8 µm pro mm Abstand von der Bohrerspitze bzw. von dem Punkt des maximalen Durchmessers aus, beträgt. Diese Durchmesserverjüngung erfolgt, von der Spitze aus gesehen, über eine axiale Länge von maximal dem 8-fachen, vorzugsweise von maximal dem 5-fachen und minimal dem 2-fachen des Nenndurchmessers des Bohrers und in dem verbleibenden Bereich bis zum Einspannende bleibt dann der Außendurchmesser des Bohrers konstant. Je nach dem Grad der Verjüngung und abhängig vom dem Nenndurchmesser hat dann der Bohrer zum Beispiel bei Durchmessern oberhalb 2 mm in dem an den Schaft angrenzenden

Spannutenabschnitt einen um mindestens 4 µm und beispielsweise bis zu ca. 1 mm geringeren Durchmesser als im Bereich der Bohrerspitze. Dies reduziert die Reibung des Bohrers bzw. der Rundfasen an der Wand des Bohrloches, ohne daß die Gefahr besteht, daß Späne in den Zwischenraum zwischen Außendurchmesser des Bohrers (definiert durch die Rundfasen) und Wand der Bohrung eindringen. Dies ist von besonderer Bedeutung im Hinblick auf die Kernverjüngung und die relativ große Länge eines Tieflochbohrers, da bei großer Reibung, vor allem im vorderen Abschnitt des Bohrers, gerade der Bereich mit der stärksten Kernverjüngung auch am meisten belastet werden würde.

Der maximale Kerndurchmesser im Bereich der Spitze des Bohrers oder in deren Nähe beträgt mindestens 35% und höchstens 50% des Nenndurchmessers des Bohrers. Die Differenzen zwischen maximalem und minimalem Kerndurchmesser liegen in der Größenordnung von 5 bis 12% des Nenndurchmessers, vorzugsweise zwischen 6 und 10%.

Weiterhin beträgt in der bevorzugten Ausführungsform das Maß T, über welches die Spannuten und gegebenenfalls auch die Außenflächen der Stege, von der Spitze ausgehend, mit einem Hartstoff beschichtet werden, etwa das 0,5- bis 2,5-fache und besonders bevorzugt zwischen dem 1- und 1,5-fachen des Nenndurchmessers des Bohrers. Dabei wird der Abstand T gemessen ab dem axial hinteren Ende der Bohrerspitze, d.h. von der Position an, bei welcher der Bohrer seinen maximalen Durchmesser bzw. Nenndurchmesser hat, der durch die radial äußeren Ecken der Hauptschneiden an der Spitze des Bohrers bestimmt wird.

Die Länge des Spannutenabschnittes (= Gesamtlänge des Bohrers abzüglich Länge des Schaftes) beträgt mindestens das 15-fache des Nenndurchmessers. Dieses Maß bestimmt jeweils die mit dem Bohrer in einem Bohrdurchgang maximal erzielbare Bohrlochtiefe, die immer etwas geringer sein muß als die Länge des Spannutenabschnittes, damit bis zur maximalen Bohrlochtiefe die Späne noch aus dem Bohrloch herausbefördert werden können . Spätestens ab einem Wert von 20 für das Verhältnis von Länge des Spannutenabschnitts zum Nenndurchmesser des Bohrers treten die Vorteile des erfindungsgemäßen Bohrers hinsichtlich Spanförderung, Stabilität und Produktivität deutlich zu Tage.

Weiterhin weist der erfindungsgemäße Bohrer in seiner bevorzugten Ausführungsform auch Kanäle für die Zuführung eines Kühlmittels auf.

Diese Kanäle erstrecken sich zunächst durch den Einspannabschnitt des Schaftes und dann durch die Stege des Bohrers, was bei relativ großen Bohrerlängen im Vergleich zum Durchmesser eine präzise Anordnung der Kanäle und eine ausgeklügelte und sorgfältige Herstellung erfordert.

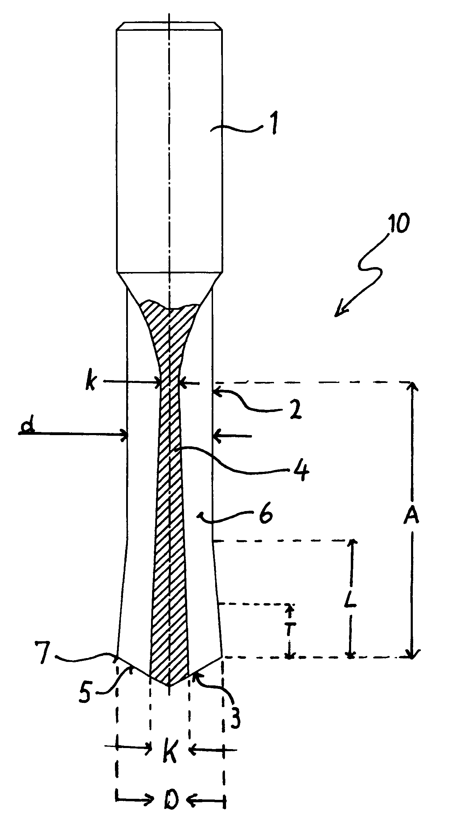

Weitere Vorteile, Merkmale und Anwendungsmöglichkeiten der vorliegenden Erfindung ergeben sich anhand der folgenden Beschreibung einer bevorzugten Ausführungsform und der dazugehörigen Figur. Die einzige Figur zeigt eine teilweise im Schnitt schematisch dargestellte Seitenansicht eines erfindungsgemäßen Bohrers, bei welchem jedoch der Durchmesser im Verhältnis zur Bohrerlänge stark vergrößert ist und wobei Stege und die Spannuten nur durch die Einhüllende der Rundfasen wiedergegeben sind, die im dem oberen Abschnitt einem Zylinder und weiter unter zur Spitze hin einem Konus entspricht.

Der insgesamt mit 10 bezeichnete Bohrer weist einen Schaft 1, einen daran anschließenden Spannutenabschnitt 2 und eine das vordere Ende des Spannutenabschnitts begrenzende Bohrerspitze 3 auf. Der Schaft 1 ist in einer Seitenansicht dargestellt, während der größte Teil des Spannutenabschnittes in einem axialen Längsschnitt dargestellt ist (allerdings ohne den schraubenförmigen Verlauf der Spannuten wiederzugeben), in welchem der innere Kernbereich 4 schraffiert dargestellt ist. Die Bohrerspitze 3 weist im allgemeinen zwei Hauptschneiden 5 auf, die sich unter einem Winkel zwischen 60 und 70° relativ zur Achse des Bohrers vom Zentrum oder einer Position in der Nähe des Zentrums aus nach außen erstrecken und durch ihre äußeren Enden den maximalen Außendurchmesser D des Bohrers definieren.

Wie man sieht, nimmt der Kerndurchmesser des Bohrers, ausgehend von einem Maximalwert K an der Spitze 3 des Bohrers bis auf einem Minimalwert k des Bohrers, der weiter hinten an dem Spannutenabschnitt 2 näher zum Schaft 1 hin liegt, kontinuierlich ab, um dann am Ende des Nutabschnitts 2 und zum Schaftabschnitt 1 hin wieder zuzunehmen, bis schließlich auf den vollen Durchmesser des Schaftes 1, wo die einzelnen Spannuten 6 enden. Die Tiefe der Spannuten nimmt demnach, ausgehend von der Spitze 3, des Bohrers, zum Schaft hin zu. Auch der Außendurchmesser des Bohrers nimmt, ausgehend von dem Wert D an den äußeren Schneidecken 7, in Richtung des Schaftes 2 ab, und zwar über eine Länge L, die zwischen dem 2-fachen und 8-fachend es Nenndurchmessers D liegt. Man beachte, daß alle axialen Maße in den Zeichnungen, wie zum Beispiel das Maß A oder L und das Maß T, im Vergleich zu den tatsächlichen Verhältnissen gegenüber dem Durchmesser D deutlich verkürzt erscheinen. Tatsächlich beträgt das Maß T, welches die Länge der Beschichtung der Spannuten bezeichnet, im Bereich zwischen dem 0,5-fachen und 3-fachen des

Bohrerdurchmessers, vorzugsweise im Bereich des 1- bis 1,5-fachen des Bohrerdurchmessers, wobei im übrigen auch die gesamte Spitze 3 mit einem Hartstoff beschichtet ist.

Die axiale Länge A, über welche hinweg die Kernverjüngung stattfindet, entspricht in etwa der maximalen Bohrlochtiefe, für welche der Bohrer vorgesehen ist, liegt also in etwa beim 10- bis 20-fachen des Bohrerdurchmessers D oder noch darüber. Maximale Verhältnisse von Länge zu Durchmesser in der Größenordnung von über 40 sind von der Anmelderin in Versuchen bereits praktisch realisiert worden. Wobei ein Verhältnis von mehr als 20 besonders bevorzugt ist.

Darüber hinaus ist es auch möglich, die Stegbreite von der Bohrerspitze zum Einspannende hin kontinuierlich schmaler zu machen. Hierdurch kann der Nutenquerschnitt nochmals vergrößert werden, was den Spantransport weiter erleichtert. Die Stegbreite kann auch von vornherein relativ gering gehalten werden.

Die Querschnittsform der Spannuten 6 entspricht in einer solchen Ausführungsform beispielsweise dem sogenannten "UFL"-Querschnitt, wie er in der deutschen Patentanmeldung DE 196 27 436 definiert wird, und ist dadurch auf einen optimalen Spantransport hin ausgelegt.

Zusätzlich können die Spannuten poliert sein, gegebenenfalls auch in dem vorderen, mit Hartstoff beschichteten Abschnitt.

Die Verjüngungen sowohl des Kerns als auch des Außendurchmessers von ihren jeweiligen maximalen auf die minimalen Werte erfolgen vorzugsweise kontinuierlich und in einem Längsschnitt bzw. mit einer Einhüllenden, wie es in der Figur dargestellt ist, entlang einer Geraden, wobei jedoch auch andere Verläufe der Querschnitt- bzw. Außendurchmesserverjüngung ohne weiteres möglich wären. Die Verjüngungen könnten gegebenenfalls auch in mehreren Stufen erfolgen.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

## Patentansprüche

1. Bohrer, insbesondere Tieflochbohrer, mit einem Schaft, (1) und einem Spannuten (6) aufweisenden Abschnitt (2), dessen Länge mehr als das Fünfzehnfache des Nenndurchmessers (D) beträgt und dessen vorderes Ende durch eine Bohrerspitze (3) gebildet wird, welche durch stirnseitig an dem vorderen Ende des Bohrers angeordnete Hauptschneiden (5) definiert wird, wobei die Bohrerspitze (3) und mindestens der an die Bohrerspitze angrenzende Bereich der Spannuten (6) bis zu einem Abstand T von der Spitze des Bohrers, der maximal das Dreifache des Nenndurchmessers (D) beträgt, mit einem Hartstoff beschichtet ist, während mindestens die Spannuten (6) in dem Bereich, der weiter als T von der Spitze beabstandet ist, unbeschichtet sind, und wobei der Bohrerkern (4) in einem Bereich in der Nähe der Bohrerspitze einen maximalen Durchmesser (K) hat, der mindestens 30% - 55% des Nenndurchmessers entspricht, der sich zu einem näher zum Schaft (1) hin gelegenen Bereich des Spannutabschnittes (2) hin auf einen minimalen Durchmesser (k) von höchstens 20% bis 50% des Nenndurchmessers verjüngt, wobei die Differenz des Maximalen Kerndurchmessers (K) im Bereich der Spitze zu dem Minimalen Kerndurchmesser (k) in dem näher zum Schaft (1) hin gelegenen Bereich mindestens 5% und höchstens 12% des Nenndurchmessers beträgt, wobei der Außendurchmesser des Bohrers sich von einem maximalen Durchmesser des Bohrers am Übergang von der Spitze zu den Nebenschneidkanten sich nach hinten um einen Betrag von 1 bis 8 µm pro mm in axialer Richtung verjüngt bis zu einem Abstand L von der Spitze, der zwischen dem Dreifachen und dem 10-fachen des Nenndurchmessers liegt und im übrigen bis zum Einspannabschnitt einen im wesentlichen konstanten minimalen Außendurchmesserwert (d) hat.

2. Bohrer nach Anspruch 1, **dadurch gekennzeichnet, daß** der maximale Kerndurchmesser (K) mindestens 35% und höchstens 50% des Nenndurchmessers (D) beträgt.

3. Bohrer nach einem der Ansprüche 1 oder 2, **dadurch gekennzeichnet, daß** die Differenz der maximalen und minimalen Kerndurchmesser zwischen 6% und 10% beträgt.

4. Bohrer nach einem der Ansprüche 1 bis 3, **dadurch gekennzeichnet, daß** der Abstand T zwischen dem 0,5- und 2,5-fachen vorzugsweise zwischen dem 1- und 1,5-fachen des Nenndurchmessers beträgt.

5. Bohrer nach einem der Ansprüche 1 bis 4, **dadurch gekennzeichnet, daß** der Abstand L zwischen dem Vierfachen und dem Achtfachen des Nenndurchmessers liegt

6. Bohrer nach Anspruch 5, **dadurch gekennzeichnet, daß** die axiale Länge des Spannutenabschnitt mindestens das 20-fache des Nenndurchmessers (D) beträgt.

7. Bohrer nach einem der Ansprüche 1 bis 6, **dadurch gekennzeichnet, daß** er Kühlkanäle für die Durchführung eines Kühlschmiermittels oder eines Luft/Öl-Gemisches aufweist.

## Claims

1. A drill, in particular a deep hole drill, comprising a shaft (1) and a portion (2) which has flutes (6) and the length of which is more than 15 times the nominal diameter (D) and the front end of which is formed by a drill tip (3) which is defined by main cutting edges (5) arranged in frontal relationship at the front end of the drill, wherein the drill tip (3) and at least the region of the flutes (6) that adjoins the drill tip is coated with a hard material as far as a distance T from the tip of the drill, which at a maximum is three times the nominal diameter (D) while at least the flutes (6) are uncoated in the region which is spaced from the tip further than T, and wherein the drill core (4) in a region in the proximity of the drill tip is of a maximum diameter (K) which corresponds to at least 30% - 55% of the nominal diameter, which narrows towards a region of the flute portion (2), that is closer towards the shaft (1), to a minimum diameter (k) of at most 20% to 50% of the nominal diameter, wherein the difference in the maximum core diameter (K) in the region of the tip in relation to the minimum core diameter (k) in the region closer towards the shaft (1) is at least 5% and at most 12% of the nominal diameter wherein the outside diameter of the drill narrows from a maximum diameter of the drill at the transition from the tip to the secondary cutting edges rearwardly by an amount of 1 to 8 µm per mm in the axial direction as far as a distance L from the tip which is between 3 times and 10 times the nominal diameter, and in the remainder up to the clamping portion is of a substantially constant minimum outside diameter value (d).

2. A drill according to claim 1 **characterised in that** the maximum core diameter (K) is at least 35% and at most 50% of the nominal diameter (D).

3. A drill according to one of claims 1 or 2 **characterised in that** the difference between maximum and minimum core diameter is between 6% and 10%.

4. A drill according to one of claims 1 to 3 **characterised in that** the distance T is between 0.5 and 2.5 times and preferably between 1 and 1.5 times the nominal diameter.

5. A drill according to one of claims 1 to 4 **characterised in that** the distance L from the tip is between 4 times and 8 times the nominal diameter.

6. A drill according to claim 5 **characterised in that** the axial length of the flute portion is at least 20 times the nominal diameter (D).

7. A drill according to one of claims 1 to 6 **characterised in that** it has cooling passages for passing a cooling lubricant or an air/oil mixture.

## Revendications

1. Foret, notamment foret pour trous profonds, ledit foret comprenant une queue (1) et une portion (2) qui comporte des goujures (6), dont la longueur est supérieure à quinze fois le diamètre nominal (D) et dont l'extrémité avant est formée par une pointe de foret (3) qui est définie par des arêtes principales (5) disposées du côté frontal à l'extrémité avant du foret, la pointe de foret (3) et au moins la région des goujures (6) qui borde la pointe de foret étant dotées d'un revêtement en matière dure jusqu'à une distance T de la pointe du foret qui est égale au maximum à trois fois le diamètre nominal (D), tandis que au moins les goujures (6) sont dépourvues de revêtement dans la région située au-delà de T par rapport à la pointe, et l'âme (4) du foret ayant dans une région proche de la pointe du foret un diamètre maximum (K) qui correspond à 30%-55% au moins du diamètre nominal qui diminue en direction de la région de la portion de goujure (2) qui est située près de la queue (1) jusqu'à atteindre un diamètre minimal (k) compris entre 20% et 50% maximum du diamètre nominal, la différence entre le diamètre maximum (K) de l'âme dans la région de la pointe et le diamètre minimum (k) de l'âme dans la région située près de la queue (1) étant égale à 5% au moins et 12% au plus du diamètre nominal, le diamètre extérieur du foret diminuant axialement de 1 à 8 µm par mm en direction de l'arrière et en partant d'un diamètre maximum du foret, au niveau de la transition de la pointe aux arêtes de coupe secondaires, jusqu'à atteindre une distance L par rapport à la pointe qui est comprise entre trois fois et dix fois le diamètre nominal et qui a par ailleurs, jusqu'à la portion de serrage, une valeur de diamètre extérieur (d) minimum sensiblement constante.

2. Foret selon la revendication 1, **caractérisé en ce que** le diamètre maximum (K) de l'âme est égal à 35% au moins et 50% au plus du diamètre nominal (D).

3. Foret selon l'une des revendications 1 ou 2, **caractérisé en ce que** la différence entre le diamètre maximum et le diamètre minimum de l'âme est comprise entre 6% et 10%.

4. Foret selon l'une des revendications 1 à 3, **caractérisé en ce que** la distance T est comprise entre 0,5 fois et 2,5 fois, avantageusement entre 1 fois et 1,5 fois, le diamètre nominal.

5. Foret selon l'une des revendications 1 à 4, **caractérisé en ce que** la distance L est comprise entre quatre fois et huit fois le diamètre nominal.

6. Foret selon la revendication 5, **caractérisé en ce que** la longueur axiale de la portion à goujures est égale à au moins vingt fois le diamètre nominal (D).

7. Foret selon l'une des revendications 1 à 6, **caractérisé en ce qu'**il comporte des canaux de refroidissement permettant le passage d'un réfrigérant lubrifiant ou d'un mélange Air/Huile.
